# EUROPEAN PATENT APPLICATION

(11) **EP 2 597 424 A2**
(43) Date of publication of application: **29.05.2013**
(21) Application number: 12189276.4
(22) Date of filing: 19.10.2012
(51) Int. Cl.: G01C 21/32

(54) **Road data creating device, method, and program**

(30) Priority: 14.11.2011 JP 2011248574
(71) Applicant: AISIN AW CO., LTD., Anjo-shi, Aichi-ken 444-1192 (JP)
(72) Inventor: Fujiwara, Ryoichi, ANJO-SHI, AICHI-KEN, 444-1192 (JP); Nagase, Kenji, ANJO-SHI, AICHI-KEN, 444-1192 (JP)
(74) Representative: Intès, Didier Gérard André

(57) **Abstract**

A road data creating device is provided including a map information storing unit that stores map information including map coordinate data, a matching table storing unit that stores a matching table, in which a coordinate point sequence specifying a position of a road is stored in association with a link ID identifying a link of the map information and a coordinate difference pattern, the coordinate point sequence delivered from a road information transmitter, a road information acquiring unit that acquires road information, a judging unit judging whether the link ID is stored in the matching table, a first link ID converting unit that converts the coordinate point sequence into the link ID, a candidate link extracting unit that extracts candidate links based on the map information, and a second link ID converting unit that converts the coordinate point sequence into the link ID of the candidate link.

## Description

### BACKGROUND OF THE INVENTION

### 1. Field of the Invention

The present invention relates to a road data creating device, a road data creating method, and a program that creates road data for received road information.

### 2. Description of the Related Art

Conventionally, various kinds of technologies for creating road data for received road information have been proposed.
For example, restored coordinates are created by restoring in a restoring part element coordinates specifying a position of a road with coordinates of at least a start point and an end point that are included in road information transmitted from a road information transmitting device. There are road information receiving devices, in which a road specifying processing part executes road matching processing to specify the position of the road based on the restored coordinates and road coordinate data stored in map coordinate data recording part (for example, refer to Japanese Patent Application; Publication No. JP-A-2003-346285).

### SUMMARY OF THE INVENTION

In the road matching processing of the road specifying processing part in the road information receiving device described in the aforementioned Patent Application; Publication No. JP-A-2003-346285, when distances from roads drawn by the road coordinate data to a road drawn by the restored coordinates are long, normal lines are extended from direct lines connecting the road coordinate data to the road drawn by the restored coordinates, the direct lines connecting the map coordinate data corresponding to the road drawn by the restored coordinates are selected based on the lengths of the normal lines. Thereafter, the road drawn by the map coordinate data located closest to the road drawn by the restored coordinates is selected among the selected direct lines connecting the road coordinate data.

However, if there are a plurality of roads drawn by the road coordinate data having a shape similar to the road drawn by the restored coordinates, a road drawn by wrong map coordinate data could be selected, which lowers the accuracy of specifying the position of the road.

In order to solve the aforementioned problem, it is an object of the present invention to provide a road data creating device, a road data creating method, and a program that are capable of specifying with high accuracy a link on a map corresponding to received road information.

### [Means for Solving the Problems]

To achieve the aforementioned object, the road data creating device according to a first aspect of the present invention includes: a map information storing unit that stores map information including map coordinate data indicating a position on a map with a coordinate; a matching table storing unit that stores a matching table, in which a coordinate point sequence specifying a position of a road on the map with at least two coordinates is stored in association with a link ID identifying a link of the map information and a coordinate difference pattern between the position of the road specified by the coordinate point sequence and the position of the link specified by the map coordinate data is stored in association with the link ID, the coordinate point sequence being delivered from a road information transmitting system; a road information acquiring unit that acquires road information including the coordinate point sequence delivered from the road information transmitting system; a matching judging unit that judges whether the link ID corresponding to the coordinate point sequence included in the road information is stored in the matching table; a first link ID converting unit that, when it has been judged that the link ID corresponding to the coordinate point sequence included in the road information is stored in the matching table, converts the coordinate point sequence into the link ID corresponding to the coordinate point sequence; a first candidate link extracting unit, when it has been judged that the link ID corresponding to the coordinate point sequence included in the road information is not stored in the matching table, extracts one or more candidate links as candidates for the link corresponding to the coordinate point sequence based on the map information; and a second link ID converting unit that, when one candidate link has been extracted by the first candidate link extracting unit, converts the coordinate point sequence into the link ID of the one candidate link, and when a plurality of candidate links have been extracted by the first candidate link extracting unit, converts the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.

The road data creating device according to a second aspect of the present invention includes a first matching table updating unit that, when the coordinate point sequence has been converted into a link ID by the second link ID converting unit, stores the coordinate point sequence in association with the link ID in the matching table and stores the coordinate difference pattern between the position of the road specified by the coordinate point sequence and the position of the link of the link ID specified by the map coordinate data in association with the link ID in the matching table.

The road data creating device according to a third aspect of the present invention includes a provisional coordinate point sequence storing unit that, when the coordinate point sequence has not been converted into a link ID by the second link ID converting unit, stores the coordinate point sequence as a provisionally determined coordinate point sequence in the matching table; a provisionally stored judging unit that judges at predetermined time intervals whether the provisionally determined coordinate point sequence is stored in the matching table; a second candidate link extracting unit, when it has been judged that the provisionally determined coordinate point sequence is stored in the matching table, extracts a plurality of candidate links corresponding to the provisionally determined coordinate point sequence based on the map information; and a second matching table updating unit that specifies the link ID of one candidate link among the plurality of candidate links, based on the coordinate difference patterns corresponding to the link IDs stored in the matching table among the link IDs of the links within a predetermined area in the vicinity of the plurality of candidate links extracted by the second candidate link extracting unit, converts the provisionally determined coordinate point sequence into the coordinate point sequence, stores anew the coordinate point sequence in association with the specified link ID in the matching table, and stores the coordinate difference pattern between the position of the road on the map specified by the coordinate point sequence and the position of the one candidate link specified by the map coordinate data in association with the specified link ID in the matching table.

The road data creating device according to a fourth aspect of the present invention includes a coordinate difference pattern judging unit that, when a plurality of candidate links have been extracted by the first candidate link extracting unit or the second candidate link extracting unit, judges whether the coordinate difference patterns between the positions of the plurality of candidate links and the positions of the roads specified by the coordinate point sequences corresponding to the plurality of candidate links are in a same direction and in a same distance; and a coordinate point sequence correcting unit that, when it has been judged that the coordinate difference patterns between the positions of the plurality of candidate links and the positions of the roads specified by the coordinate point sequences corresponding to the plurality of candidate links are not in the same direction and in the same distance, corrects the road specified by the coordinate point sequence by rotating by a predetermined angle, enlarging by a predetermined length, or reducing by a predetermined length.

The road data creating method according to a fifth aspect of the present invention includes the steps of: acquiring road information including a coordinate point sequence specifying a position of a road on a map with at least two coordinates, the road information being delivered from a road information transmitting system; judging whether a link ID corresponding to the coordinate point sequence included in the road information acquired at the road information acquiring step is stored in a matching table, in which the coordinate point sequence is stored in association with the link ID identifying a link of the map information and a coordinate difference pattern between the position of the road specified by the coordinate point sequence and the position of the link specified by map coordinate data is stored in association with the link ID, the map coordinate data indicating a position on the map with a coordinate; converting, when it has been judged at the matching judging step that the link ID corresponding to the coordinate point sequence included in the road information is stored in the matching table, the coordinate point sequence into the link ID corresponding to the coordinate point sequence; extracting, when it has been judged at the matching judging step that the link ID corresponding to the coordinate point sequence included in the road information is not stored in the matching table, one or more candidate links as candidates for the link corresponding to the coordinate point sequence based on the map information; converting, when one candidate link has been extracted at the first candidate link extracting step, the coordinate point sequence into the link ID of the one candidate link; and converting, when a plurality of candidate links have been extracted at the first candidate link extracting step, the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.

The program according to a sixth aspect of the present invention causes a computer including: a map information storing unit that stores map information including map coordinate data indicating a position on a map with a coordinate; and a matching table storing unit that stores a matching table, in which a coordinate point sequence specifying a position of a road on the map with at least two coordinates, the coordinate point sequence being delivered from a road information transmitting system, is stored in association with a link ID identifying a link of the map information and a coordinate difference pattern between the position of the road specified by the coordinate point sequence and the position of the link specified by the map coordinate data is stored in association with the link ID, to execute the steps of: acquiring road information including the coordinate point sequence that is delivered from the road information transmitting system; judging whether the link ID corresponding to the coordinate point sequence included in the road information acquired at the road information acquiring step is stored in the matching table; converting, when it has been judged at the matching judging step that the link ID corresponding to the coordinate point sequence included in the road information is stored in the matching table, the coordinate point sequence into the link ID corresponding to the coordinate point sequence; extracting, when it has been judged at the matching judging step that the link ID corresponding to the coordinate point sequence included in the road information is not stored in the matching table, one or more candidate links as candidates for the link corresponding to the coordinate point sequence based on the map information; converting, when one candidate link has been extracted at the first candidate link extracting step, the coordinate point sequence into the link ID of the one candidate link; and converting, when a plurality of candidate links have been extracted at the first candidate link extracting step, the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.

In the road data creating device, the road data creating method, and the program having the aforementioned configuration, when the link ID corresponding to the coordinate point sequence included in the road information is stored in the matching table, the coordinate point sequence is converted into the link ID. Therefore, it is possible to accurately and rapidly specify the link on the map corresponding to the coordinate point sequence included in the road information.

### BRIEF DESCRIPTION OF THE DRAWINGS

FIG. 1 is a block diagram showing an example of configuration of a navigation device according to the present embodiment.

FIG. 2 illustrates communication between the navigation device and road information transmitting systems.

FIG. 3 shows an example of a matching data file stored in a matching DB.

FIG. 4 is a main flowchart showing "link ID converting processing" to convert a coordinate point sequence included in road information into a link ID, which is executed by the navigation device.

FIG. 5 is a sub-flowchart showing sub-processing of "matching table updating processing" shown in FIG. 4.

FIG. 6 is a sub-flowchart showing sub-processing of "matching table updating processing" shown in FIG. 4.

FIG. 7 shows an example of converting the coordinate point sequence into a link ID of one candidate link from two candidate links based on coordinate difference amounts.

FIG. 8 is a flowchart showing "coordinate point sequence determining processing" to determine a provisionally determined coordinate point sequence stored in respective matching tables.

### DETAILED DESCRIPTION OF THE PREFERRED EMBODIMENT

A road data creating device, a road data creating method, and a program according to the present invention are described in further detail below with reference to an embodiment in conjunction with the accompanying drawings.

### [Schematic structure of navigation device]

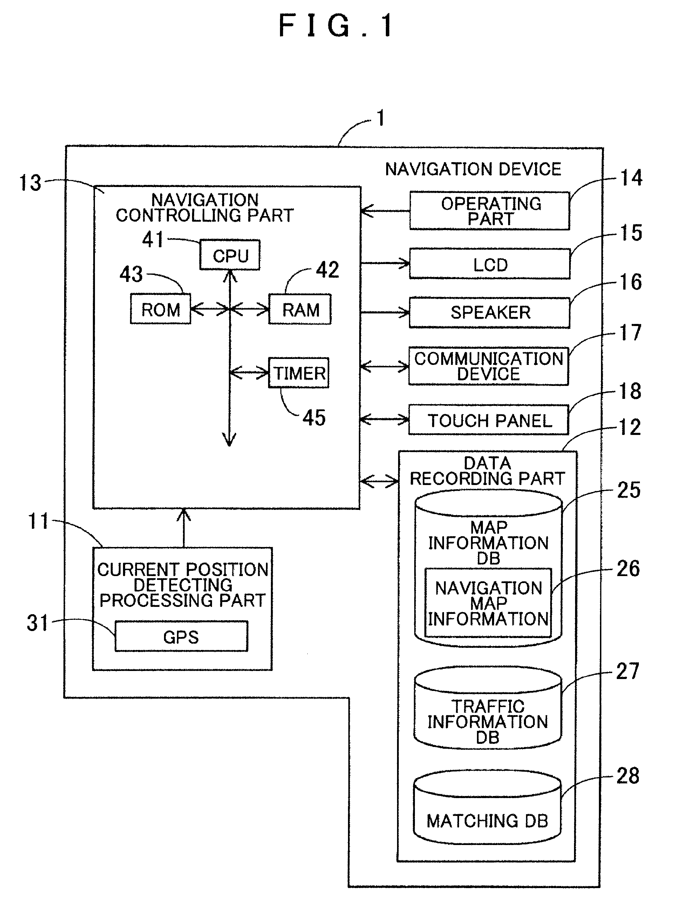

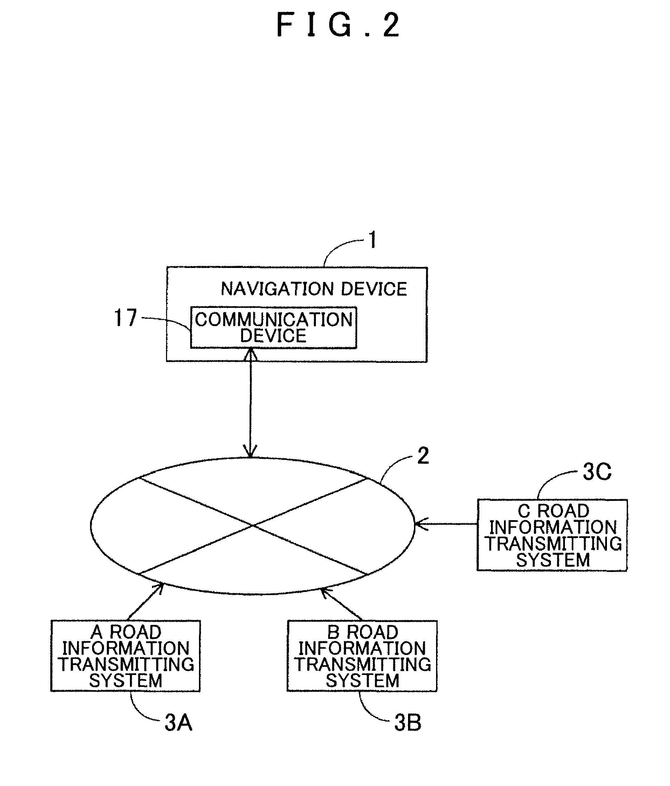

First, a schematic structure of the navigation device according to the present embodiment will be explained with reference to FIGS. 1 and 2. FIG. 1 is a block diagram showing a navigation device 1 according to the present embodiment. FIG. 2 illustrates communication between the navigation device 1 and an A road information transmitting system 3A to a C road information transmitting system 3C.

As shown in FIG. 1, the navigation device 1 according to the present embodiment is composed of: a current position detecting processing part 11 that detects a current position of a vehicle and the like; a data recording part 12 in which various kinds of data is recorded; a navigation controlling part 13 that performs various kinds of arithmetic processing based on input information; an operating part 14 that accepts an operation from an operator; a liquid crystal display (LCD) 15 that displays information of a map and the like to the operator; a speaker 16 that outputs audio guidance regarding route guidance and the like; a communication device 17 that performs communication with the A road information transmitting system 3A, the B road information transmitting system 3B, the C road information transmitting system 3C, a road information delivery center (not shown), and the like via a cellular phone network; and a touch panel 18 installed on a surface of the liquid crystal display 15. Output signals of a vehicle speed sensor (not shown) that detects a travel speed of the vehicle may be inputted to the navigation controlling part 13.

In addition, as shown in FIG. 2, the navigation device 1. is connected with the A road information transmitting system 3A, the B road information transmitting system 3B, and the C road information transmitting system 3C through a network 2. The A road information transmitting system 3A, the B road information transmitting system 3B, and the C road information transmitting system 3C deliver "traffic information" such as information regarding congestion of roads and the like, traffic regulation information, and the like, which are created by collecting information of traffic control systems of police, Japan Highway Public Corporation, and the like, "coordinate point sequences" specifying positions of roads associated with the respective traffic information, and latest road information including a system ID identifying the road information transmitting system 3A to 3C at predetermined time intervals (for example, intervals of 5 minutes). In addition, as the network 2, communication systems of, for example, a cellular phone network, a telephone network, a public communication network, a private communication network, a communication network such as an Internet can be utilized.

The navigation device 1 is capable of receiving the latest road information delivered from the respective road information transmitting systems 3A to 3C through the network 2 at predetermined time intervals (for example, at intervals of 5 minutes). In addition, the "traffic information" is detailed information regarding traffic information such as road congestion information regarding congestion of roads and the like, traffic regulation information due to road construction, building construction, and the like. In case of the road congestion information, the detailed information includes actual length of congestion, expected time when the congestion is solved, and the like. In case of the traffic regulation information, the detailed information includes duration of road construction, building construction, and the like, closed roads, one-way traffic, types of traffic regulation such as restricted lane, time period of traffic regulation, and the like.

In addition, the "coordinate point sequence" specifying the position of the road is composed of at least two coordinates (a start point and an end point) to specify the position of the road from map coordinate data stored in the respective road information transmitting systems 3A to 3C. In addition, the "coordinate point sequence" specifying the position of the road is provided with shape interpolating points optimal to the number of curvatures if the road includes complicated curvatures. For example, in case of a road having a curvature with a right angle, the coordinate point sequence is composed of a start point, an end point, and a shape interpolating point that is set to the point of the curvature with the right angle.

Hereinafter, the respective components composing the navigation device 1 are explained. The current position detecting processing part 11 includes a GPS 31 and the like, and can detect the current position of the vehicle, a vehicle direction, a travel distance, and the like. The current position detecting processing part 11 may be connected with a directional sensor (not shown), a distance sensor (not shown), and the like.

The data recording part 12 is provided with: a hard disk (not shown) and a flash memory (not shown) serving as an external storage device and a storage medium; a driver (not shown) for reading a map information database (a map information DB) 25, a traffic information database (a traffic information DB) 27, a matching database (a matching DB) 28, and a predetermined program, and the like, which are recorded in the hard disk and the like, and writing predetermined data in the hard disk, the flash memory; and the like.

In addition, the map information DB 25 stores navigation map information 26 to be utilized for travel guidance and route calculation of the navigation device 1. In addition, the traffic information DB 27 stores current traffic information in association with one or more link IDs of the navigation map information 26, which are converted from coordinate point sequences corresponding to each traffic information, as described later. The current traffic information is information regarding current status of congestion of roads composed of actual length of the congestion, required time, cause of the congestion, expected time when the congestion is solved, and the like, which is created by collecting the traffic information received from the respective road information transmitting systems 3A to 3C.

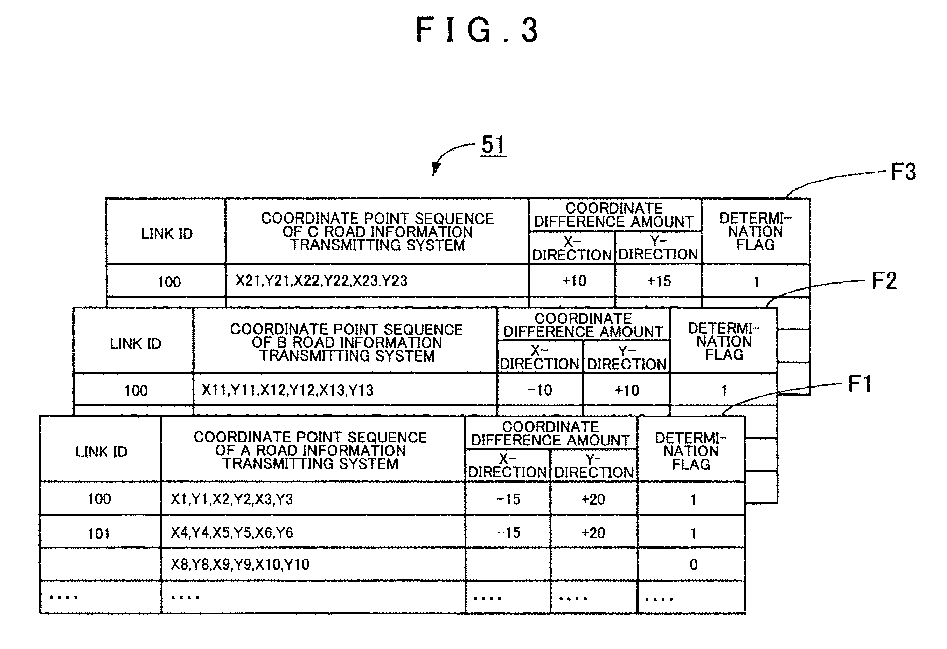

The matching DB 28 stores a matching data file 51 (refer to FIG. 3) storing link IDs of the navigation map information 26, to which the coordinate point sequences received from the respective road information transmitting systems 3A to 3C are converted for matching tables F1 to F3 respectively associated with the A road information transmitting system 3A, the B road information transmitting system 3B, and the C road information transmitting system 3C.

The navigation map information 26 here is composed of various kinds of information necessary for route guidance and map display, for example, newly-constructed road information for specifying newly-constructed roads, map display data for displaying a map, intersection data regarding intersections, node data regarding node points, link data regarding roads (links), route calculation data for calculating routes, facility data regarding POIs (Point of Interests) such as shops as a kind of facility, point search data for searching for a point, and the like.

The node data includes data regarding branch points (including intersections, T-shaped roads, and the like) on actual roads, coordinates (positions) of nodes set every predetermined distance according to curvature radius on each road and the like, node attributes indicating whether the respective nodes correspond to intersections and the like, connected link number lists that are lists of link IDs serving as identification numbers of links connected to the respective nodes, adjacent node number lists that are lists of node numbers of nodes adjacent through links to the respective nodes, and the like.

The link data includes: regarding the respective links forming roads, data indicating link IDs specifying links, link lengths indicating lengths of the links, coordinate positions (for example, latitude and longitude) of start points and end points of the links, presence or absence of center divider, widths of roads that the links belong to, inclination, cant, bank, condition of road surface, the number of lanes of roads, positions where the number of lanes decreases, positions where the widths are narrowed, rail crossings, and the like; regarding corners, data indicating curvature radii, intersections, T-shaped roads, entrances and exits of corners and the like; regarding road attributes, data indicating downhill lanes, uphill lanes, and the like; and regarding road types, data indicating general roads such as national roads, prefectural roads, narrow streets, and the like, toll roads such as national highways, intercity highways, general toll roads, toll bridges, and the like.

The facility data includes data indicating names, addresses, telephone numbers, coordinate positions on the map (for example, latitudes and longitudes of center positions, entrances, exits, and the like), facility icons and landmarks indicating positions of facilities on the map, and the like regarding POIs. The POIs include hotels in each region, amusement parks, palaces, hospitals, gas stations, parking lots, stations, airports, ferry ports, interchanges (IC), junctions (JCT), parking areas (PA), and the like. The data is stored together with facility IDs specifying PUIs.
In addition, the contents of the map information DB 25 is updated by downloading update information delivered from a map information delivery center (not shown) through the communication device 17.

As shown in FIG. 1, the navigation controlling part 13 composing the navigation device 1 is provided with: a CPU 41 serving as a computing device and a control device for performing overall control of the navigation device 1; internal storage devices such as a RAM 42 used as a working memory when the CPU 41 executes various arithmetic processing and in which route data or the like when the route has been calculated is stored, a ROM 43 which records a program for control, and the like; a timer 45 for measuring a time; and the like.

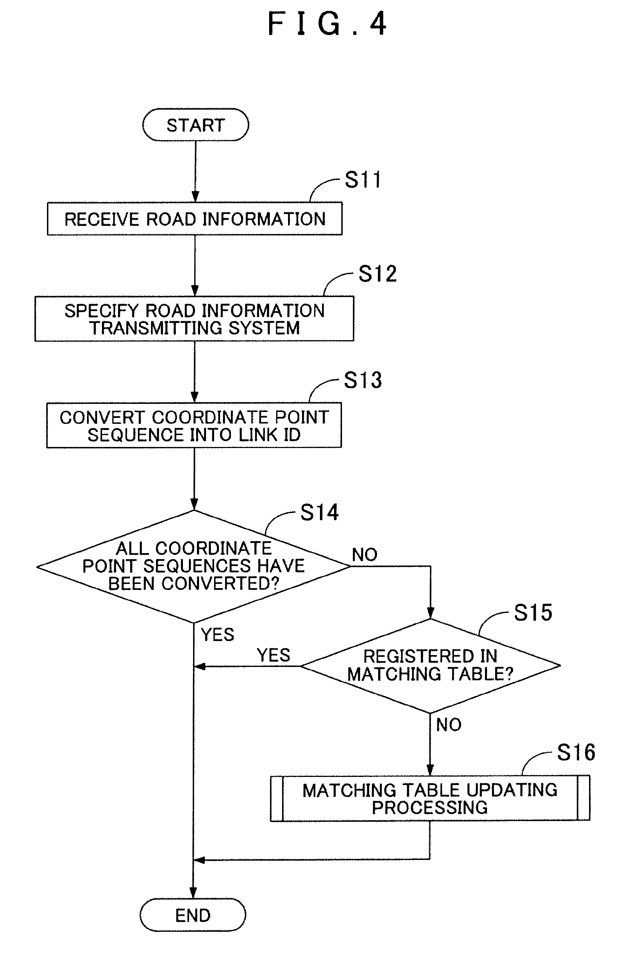

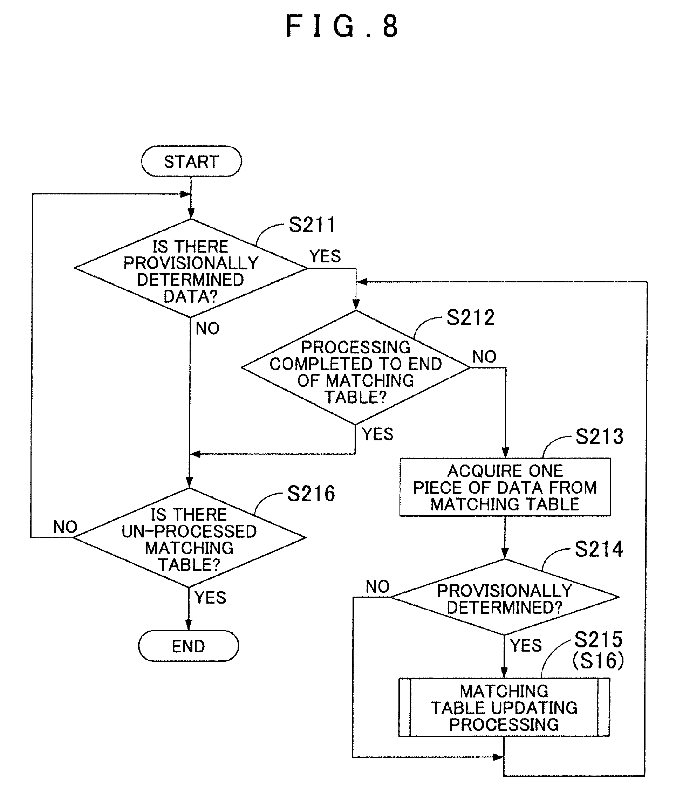

The ROM 43 stores a program of "link ID converting processing" (refer to FIG. 4) to convert coordinate point sequences specifying positions of roads associated with respective pieces of traffic information into link IDs of the navigation map information 26. The coordinate point sequences are included in the road information received from the after-mentioned road information transmitting systems 3A to 3C. In addition, the ROM 43 stores a program of "coordinate point sequence determining processing" (refer to FIG. 8) to convert provisionally determined coordinate point sequences stored in the after-mentioned matching tables F1 to F3 into determined coordinate point sequences and store link IDs of the navigation map information 26 corresponding to the coordinate point sequences.

Further, the navigation controlling part 13 is electrically connected to respective peripheral devices (actuators) of the operating part 14, the liquid crystal display 15, the speaker 16, the communication device 17, and the touch panel 18.
The operating part 14 is operated when correcting the current position at the time of starting travel and inputting a departure point as a guidance start point and a destination as a guidance end point, or when performing a search for information relating to a facility, and is composed of various keys and a plurality of operation switches. The navigation controlling part 13 performs control to execute various operations according to a switch signal outputted by the operation such as pressing of each switch.

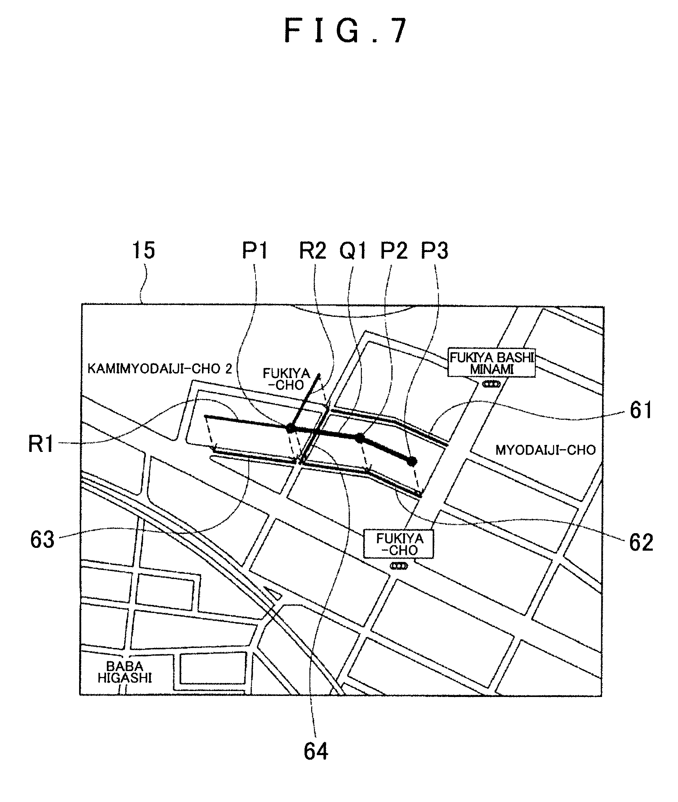

On the liquid crystal display 15, map information of the currently-traveled area, (refer to FIG. 7 and the like), map information of the vicinity of the destination, operation guidance, an operation menu, key guidance, a recommended route from the current position to the destination, guidance information along the recommended route, traffic information, news, weather forecast, time, E-mail, TV programs, and the like are displayed.

The speaker 16 outputs audio guidance for traveling along the recommended route based on an instruction from the navigation controlling part 13, and the like. For example, the audio guidance as "200m ahead, to the right direction at XX intersection." is provided.

The communication device 17 is a communication unit that performs communication with the road information transmitting systems 3A to 3C, the map information delivery center (not shown) through a cellular phone network or the like. The communication device 17 receives the latest road information delivered from the respective road information transmitting systems 3A to 3C and transmits and receives the latest version of the update map information to and from the map information delivery center.

The touch panel 18 is a transparent panel-type touch switch provided on the surface of the display screen of the liquid crystal display 15, and configured such that various kinds of instruction commands can be inputted by pressing a button or the map displayed on a screen of the liquid crystal display 15 and, when performing drag by pressing the display screen with a finger, the detection of the movement direction and movement speed of each finger and the detection of the number of fingers pressing the display screen can be performed. The touch panel 18 may employ an optical sensor type liquid crystal system where the screen of the liquid crystal display 15 is directly pressed.

Next, an example of the matching data file 51 stored in the matching DB 28 is described with reference to FIG. 3.
As shown in FIG. 3, the matching data file 51 is composed of the matching tables F1 to F3 which are associated with the A road information transmitting system 3A, the B road information transmitting system 3B, and the C road information transmitting system 3C respectively. The matching tables F1 to F3 have the same structure. Therefore, the structure of the matching table F1 is described.

The matching table F1 is composed of "link ID," "coordinate point sequence of A road information transmitting system," "coordinate difference amount," and "determination flag." The "link ID" includes link IDs of the navigation map information 26. In addition, the "coordinate point sequence of A road information transmitting system" includes coordinate point sequences specifying positions of roads, which are included in the road information received from the A road information transmitting system 3A. Consequently, the coordinates of the start points and the end points of the coordinate point sequences are the coordinates of the map coordinate data stored in the A road information transmitting system 3A and correspond to the coordinates of the nodes of both ends of the links.

In addition, the "coordinate difference amount" includes coordinate difference amounts in a X-direction and a Y-direction of the links of the navigation map information 26 identified by the "link IDs" against the coordinate point sequences when the "coordinate point sequences of A road information transmitting system" are allocated on the map of the navigation map information 26. The east-west direction of the map of the navigation map information 26 is defined as the X-direction. The difference amount in the east direction is indicated with "+" and in the west direction with "-." In addition, the north-south direction of the map of the navigation map information 26 is defined as the Y-direction. The difference amount in the north direction is indicated with "+" and in the south direction with "-."

For example, when "X-direction" of the "coordinate difference amount" is "-15" and "Y-direction" is "+20," the "coordinate difference amount" indicates that the link of the navigation map information 26 identified by the "link ID" is located at the position shifted by "-15" to the west direction and by "+20" to the north direction from the coordinate point sequence when the "coordinate point sequence of A road information transmitting system" is allocated on the map of the navigation map information 26.

The "determination flag" includes "1" representing that the "link ID" and the "coordinate difference amount" corresponding to the "coordinate point sequence of A road information transmitting system" are stored and the coordinate point sequence is being determined and "0" representing that the "link ID" and the "coordinate difference amount" corresponding to the "coordinate point sequence of A road information transmitting system" are not stored and the coordinate point sequence is a provisionally determined coordinate point sequence of a new road.

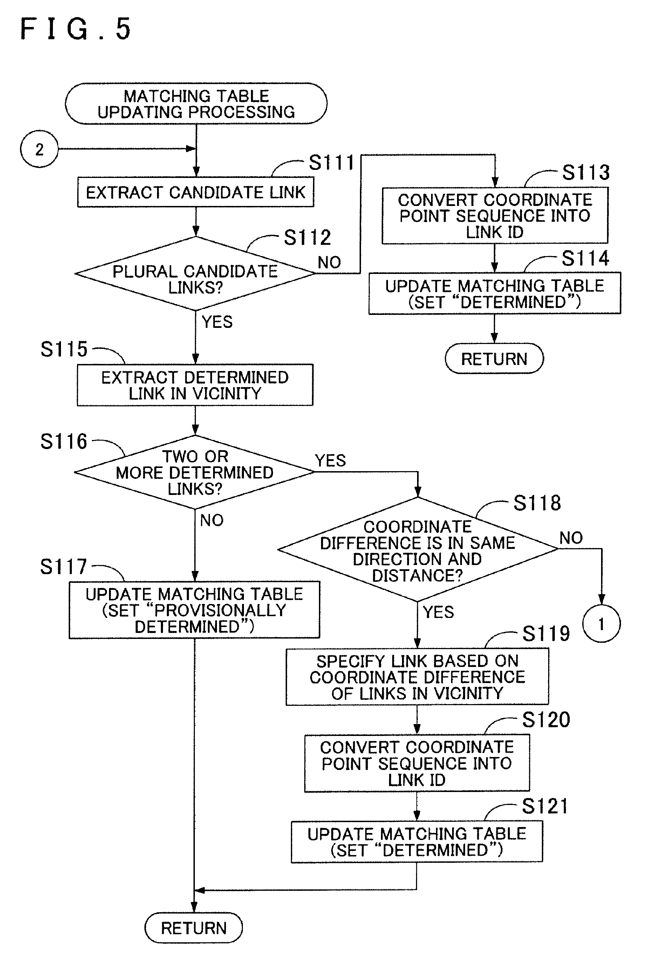

That is, when "0" is stored in the "determination flag", the coordinate point sequence included in the road information received from the A road information transmitting system 3A is stored as the "provisionally determined coordinate point sequence" in the "coordinate point sequence of A road information transmitting system" and data is not stored in the "link ID" and the "coordinate difference amount" (refer to FIG. 5), as described later.

Consequently, the coordinate point sequences specifying positions of roads that are included in the road information received from the B road information transmitting system 3B are stored in "coordinate point sequence of B road information transmitting system" of the matching table F2. The coordinate point sequences specifying positions of roads that are included in the road information received from the C road information transmitting system 3C are stored in "coordinate point sequence of C road information transmitting system" of the matching table F3.

### [Link ID converting processing]

Next, the "link ID converting processing", which is processing to be executed by the CPU 41 of the navigation device 1 configured as above and to convert the coordinate point sequences specifying the positions of the roads associated with the respective pieces of traffic information that are included in the received road information into the link IDs of the navigation map information 26, is described with reference to FIGS. 4 to 7. The program shown by a flowchart in FIG. 4 is executed by the CPU 41 when the road information has been received from any one of the road information transmitting systems 3A to 3C.

As shown in FIG. 4, the CPU 41 stores in the RAM 42 the road information received from any one of the road information transmitting systems 3A to 3C through the communication device 17 at Step (hereinafter, referred to as "S") 11.

At S12, the CPU 41 reads the received road information from the RAM 42 and acquires a system ID in the road information, the system ID identifying the road information transmitting systems 3A to 3C. That is, the CPU 41 specifies using the system ID from which system among the road information transmitting systems 3A to 3C the road information has been delivered.

At S13, the CPU 41 sequentially reads the "coordinate point sequences" included in the received road information from the RAM 42 and converts each of the "coordinate point sequences" into the "link ID" corresponding to the "coordinate point sequence" as the "coordinate point sequence" of the matching table corresponding to the system ID acquired at S12. That is, the CPU 41 sequentially stores the respective "link IDs" read from the matching table corresponding to the system ID acquired at S12 in association with the respective "coordinate point sequences" in the RAM 42. In addition, the CPU 41 stores the coordinate point sequences that have not been converted into the "link IDs" among the "coordinate point sequences" included in the road information as "unconverted coordinate point sequences" in the RAM 42.

Specifically, for example, when the system ID acquired at S12 is the system ID identifying the A road information transmitting system 3A, the CPU 41 sequentially reads the "coordinate point sequences" included in the road information, reads the "link ID" corresponding to each of the coordinate point sequences as the "coordinate point sequence of A road information transmitting system" of the matching table F1, and stores the read "link ID" in association with the "coordinate point sequence" in the RAM 2.

For example, as shown in FIG. 3, when the coordinate point sequence of the road information received from the A road information transmitting system 3A is "X1, Y1, X2, Y2, X3, Y3," the CPU 41 stores a link ID "100" in the matching table F1 in association with the coordinate point sequence "X1, Y1, X2, Y2, X3, Y3" in the RAM 42.

Subsequently, at S14, the CPU 41 executes judging processing to judge whether all of the "coordinate point sequences" included in the road information have been converted into "link IDs" using the matching table corresponding to the system ID acquired at S12. That is, the CPU 41 executes judging processing to judge whether the "coordinate point sequences" included in the road information are being stored as the "unconverted coordinate point sequences" in the RAM 42.

When it has been judged that all of the "coordinate point sequences" included in the road information have been converted into "link IDs", that is, when it has been judged that the "coordinate point sequences" included in the road information are not being stored as the "unconverted coordinate point sequences" in the RAM 42 (S14: YES), the CPU 41 terminates the current processing.

On the other hand, when it has been judged that there is a "coordinate point sequence" that has not been converted into a "link ID", that is, when it has been judged that a coordinate point sequence included in the road information is stored as an "unconverted coordinate point sequence" in the RAM 42 (S14: NO), the CPU 41 proceeds to the processing at S15. At S15, the CPU 41 executes judging processing to judge whether the coordinate point sequence stored in the RAM 42 as the "unconverted coordinate point sequences" is already stored as the "provisionally determined coordinate point sequence" of which the "determination flag" is set to "0" in the matching table corresponding to the system ID acquired at S12.

When it has been judged that a coordinate point sequence stored in the RAM 42 as the "unconverted coordinate point sequence" is already stored as the "provisionally determined coordinate point sequence" of which the "determination flag" is set to "0" in the matching table corresponding to the system ID acquired at S12 (S15: YES), the CPU 41 terminates the current processing.

For example, as shown in FIG. 3, when the coordinate point sequence "X8, Y8, X9, Y9, X10, Y10" stored in the RAM 42 as the "unconverted coordinate point sequence" is stored as the provisionally determined coordinate point sequence "X8, Y8, X9, Y9, X10, Y10" in the "coordinate point sequence of A road information transmitting system" of which the "determination flag" is set to "0" in the matching table F1 corresponding to the system ID acquired at S12 (S15: YES), the CPU 41 terminates the current processing.

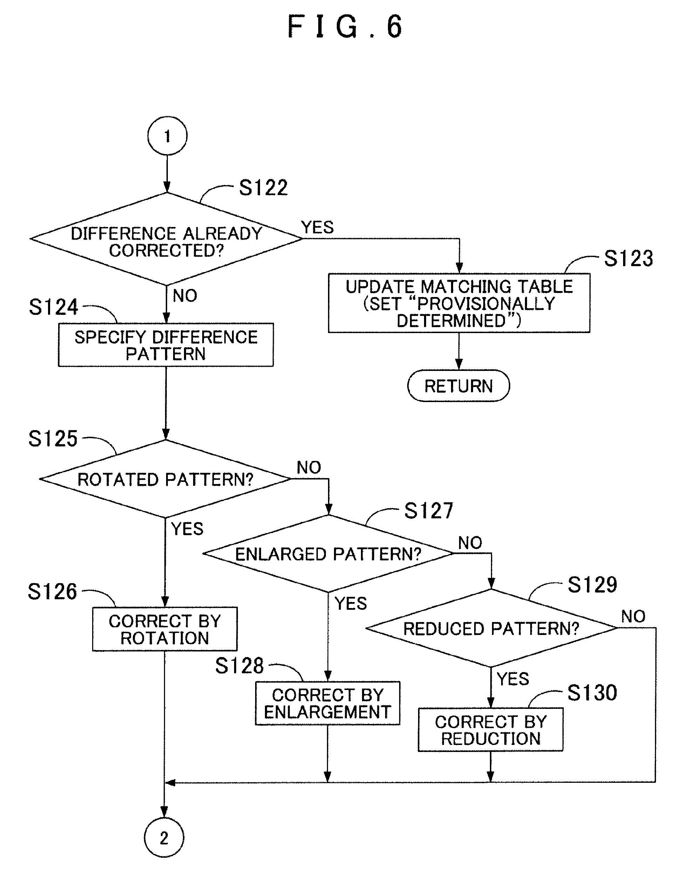

On the other hand, when it has been judged that a coordinate point sequence stored in the RAM 42 as the "unconverted coordinate point sequence" is not stored as the "provisionally determined coordinate point sequence" of which the "determination flag" is set to "0" in the matching table corresponding to the system ID acquired at S12 (S15: NO), the CPU 41 judges that the coordinate point sequence is a coordinate point sequence of a newly-created road and proceeds to the processing at S16. At S16, the CPU 41 executes sub-processing of "matching table updating processing" described hereafter (refer to FIGS. 5 and 6), and then terminates the current processing.

### [Matching table updating processing]

Next, the sub-processing of the "matching table updating processing" to be executed by the CPU 41 at S16 is described with reference to FIGS. 5 to 7.
As shown in FIGS. 5 and 6, firstly, at S111, the CPU 41 reads an "unconverted coordinate point sequence" from the RAM 42 and draws the "unconverted coordinate point sequence" on the map of the navigation map information 26.

The CPU 41 extracts as "candidate links" one or more links that have a shape similar to and a direction along the "unconverted coordinate point sequence" within a predetermined area in the vicinity (for example, within a 300 m square centered at the "unconverted coordinate point sequence") of the "unconverted coordinate point sequence" among links of roads drawn by the map coordinate data of the navigation map information 26 and stores the link IDs of the respective candidate links.

Subsequently, at S112, the CPU 41 executes judging processing to judge whether a plurality of candidate links have been extracted, that is, judge whether there are a plurality of link IDs of the candidate links by reading the link IDs of the candidate links from the RAM 42. When it has been judged that only one candidate link has been extracted (S112: NO), the CPU 41 proceeds to the processing at S113. At S113, the CPU 41 converts the "unconverted coordinate point sequence" included in the road information received at S11 into the link ID of the candidate link. That is, the CPU 41 stores the link ID of the candidate link in association with the "unconverted coordinate point sequence" in the RAM 42.

At S114, the CPU 41 stores the "unconverted coordinate point sequence" in the "coordinate point sequence" of the matching table corresponding to the system ID acquired at S12 and stores the link ID of the candidate link in the "link ID" of the matching table, and stores "1" in the "determination flag" of the matching table. In addition, the CPU 41 calculates a coordinate difference amount in the X direction and the Y direction of the candidate link against the "unconverted coordinate point sequence" allocated on the map of the navigation map information 26, stores the respective values in the "X direction" and the "Y direction" of the "coordinate difference amount" of the matching table, and updates the matching table.

The CPU 41 reads the "difference correction flag" from the RAM 42, sets "OFF" to the "difference correction flag," and stores it anew in the RAM 42. Thereafter, the CPU 41 terminates the current sub-processing, returns to the main flowchart, and terminates the current processing. The "difference correction flag" is stored in the RAM 42 being set to "OFF" when the navigation device 1 has been started.

On the other hand, when it has been judged that a plurality of candidate links have been extracted (S112: YES), the CPU 41 proceeds to the processing at S115. At S115, the CPU 41 extracts link IDs of links existing within a predetermined area (for example, within 400m square centered at each of the plurality of candidate links) in the vicinity of the plurality of candidate links among the link IDs stored in the "link ID" of the matching table corresponding to the system ID acquired at S12 and stores the extracted link IDs in the RAM 42.

Subsequently, at S116, the CPU 41 executes judging processing to judge whether two or more link IDs of the links existing within the predetermined area in the vicinity of the plurality of candidate links among the link IDs stored in the "link ID" of the matching table have been extracted. When it has been judged that there are no link IDs or only one link ID of the link existing within the predetermined area in the vicinity of the plurality of candidate links among the link IDs stored in the "link ID" of the matching table (S116: NO), the CPU 41 proceeds to the processing at S117.

At S117, the CPU 41 stores the "unconverted coordinate point sequence" as the "provisionally determined coordinate point sequence" in the "coordinate point sequence" of the matching table corresponding to the system ID acquired at S12, stores "0" in the "determination flag" corresponding to the "provisionally determined coordinate point sequence" of the matching table, and updates the matching table. Consequently, no data is stored in the "link II)" or the "coordinate difference amount" corresponding to the "provisionally determined coordinate point sequence" of the matching table. In addition, the CPU 41 reads the "difference correction flag" from the RAM 42, sets the difference correction flag to "OFF", and stores it anew in the RAM 42. Thereafter, the CPU 41 terminates the current sub-processing, returns to the main flowchart, and terminates the current processing.

For example, as shown in FIG. 3, the CPU 41 stores the coordinate point sequence "X8, Y8, X9, Y9, X10, Y10", which is stored in the RAM 42 as the "unconverted coordinate point sequence", as the provisionally determined coordinate point sequence "X8, Y8, X9, Y9, X10, Y10" in the "coordinate point sequence of A road information transmitting system" of the matching table F1 corresponding to the system ID acquired at S12. In addition, the CPU 41 stores "0" in the "determination flag" corresponding to the provisionally determined coordinate point sequence "X8, Y8, X9, Y9, X10, Y10" of the matching table F1. In addition, the CPU 41 does not store data in the "link ID" or the "coordinate difference amount" corresponding to the provisionally determined coordinate point sequence "X8, Y8, X9, Y9, X10, Y10" of the matching table F1.

On the other hand, when it has been judged that there are two or more link IDs of the links existing within the predetermined area in the vicinity of the plurality of candidate links among the link IDs stored in the "link ID" of the matching table (S116: YES), the CPU 41 proceeds to the processing at S118. At S118, the CPU 41 reads data in the X-direction and the Y-direction of the "coordinate difference amounts" corresponding to the respective two or more link IDs of the matching table corresponding to the system ID acquired at S12 and executes judging processing to judge whether the respective "coordinate difference amounts" are almost in the same direction and almost of the same distance, that is, the respective "coordinate difference amounts" are in the same direction pattern.

When it has been judged that the "coordinate difference amounts" corresponding to the respective two or more link IDs are almost in the same direction and almost of the same distance, that is, it has been judged that the "coordinate difference amounts" corresponding to the respective two or more link IDs are in the same direction pattern (S118:YES), the CPU 41 proceeds to the processing at S119.

At S119, the CPU 41 calculates the coordinate difference amounts in the X-direction and the Y-direction of the respective candidate links against the "unconverted coordinate point sequence" allocated on the map of the navigation map information 26. The CPU 41 extracts the candidate link, of which the coordinate difference amount in the X-direction and the Y-direction against the "unconverted coordinate point sequence" is almost in the same direction and almost of the same distance as the "coordinate difference amounts" corresponding to the respective two or more link IDs among the respective candidate links, as the candidate link corresponding to the "unconverted coordinate point sequence".

For example, as shown in FIG. 7, the CPU 41 extracts as the "candidate links" links 61 and 62, which are similar to and in the direction along an "unconverted coordinate point sequence Q1" composed of coordinates P1, P2 and P3, within the predetermined area in the vicinity of the "unconverted coordinate point sequence Q1" and stores the link IDs of the candidate links 61 and 62 in the RAM 42.

The CPU 41 extracts link IDs of links 63 and 64 existing within the predetermined area in the vicinity of the candidate links 61 and 62 from the "link ID" of the matching table corresponding to the system ID acquired at S12. Thereafter, because the "coordinate difference amounts" corresponding to the link IDs of the links 63 and 64 of the matching table, that is, the "coordinate difference amounts" af the links 63 and 64 against coordinate point sequences R1 and R2 are almost in the same direction and almost of the same distance, the CPU 41 judges that the "coordinate difference pattern" is in the same direction pattern.

The CPU 41 extracts, as the candidate link corresponding to the "unconverted coordinate point sequence Q1," the candidate link 62, of which the "coordinate difference amount" is in almost the same direction and of almost the same distance as the "coordinate difference amounts" corresponding to the link IDs of the links 63 and 64 of the matching table among the candidate links 61 and 62.

As shown in FIG. 5, at S120, the CPU 41 converts the "unconverted coordinate point sequence" included in the road information received at S11 into the link ID of the candidate link. That is, the CPU 41 stores the link ID of the candidate link in association with the "unconverted coordinate point sequence" in the RAM 42.

Subsequently, at S121, the CPU 41 stores the "unconverted coordinate point sequence" in the "coordinate point sequence" of the matching table corresponding to the system ID acquired at S12, stores the link ID of the candidate link stored in association with the "unconverted coordinate point sequence" in the "link ID" of the matching table, and stores "1" in the "determination flag" of the matching table.

In addition, the CPU 41 calculates the coordinate difference amount in the X-direction and the Y-direction of the candidate link, of which the link ID has been stored in the matching table, against the "unconverted coordinate point sequence" allocated on the map of the navigation map information 26, stores the respective values in the "X-direction" and the "Y-direction" of the "coordinate difference amount" of the matching table, and updates the matching table. In addition, the CPU 41 reads the "difference correction flag" from the RAM 42, sets the difference correction flag to "OFF", and stores it anew in the RAM 42. Thereafter, the CPU 41 terminates the current sub-processing, returns to main flowchart, and terminates the current processing.

On the other hand, when it has been judged at S118 that the "coordinate difference amounts" corresponding to the respective two or more link IDs are not almost in the same direction and almost of the same distance, that is, it has been judged that the "coordinate difference amounts" corresponding to the respective two or more link IDs are not in the same direction pattern (S118: NO), the CPU 41 proceeds to the processing at S122 shown in FIG. 6. At S122, the CPU 41 reads the "difference correction flag" from the RAM 42 and executes judging processing to judge whether the difference correction flag is set to "ON", that is, whether the difference is already corrected.

When it has been judged that the difference correction flag is set to "ON", that is, the difference is already corrected (S122: YES), the CPU 41 proceeds to the processing at S123. At S123, the CPU 41 stores the "unconverted coordinate point sequence" as the "provisionally determined coordinate point sequence" in the "coordinate point sequence" of the matching table corresponding to the system ID acquired at S12, stores "0" in the "determination flag" corresponding to the "provisionally determined coordinate point sequence" of the matching table, and updates the matching table.

Consequently, data is not stored in the "link ID" and "coordinate difference amount" corresponding to the "provisionally determined coordinate point sequence" of the matching table. In addition, the CPU 41 reads the "difference correction flag" from the RAM42, sets the difference correction flag to "OFF", and stores it anew in the RAM 42. Thereafter, the CPU 41 terminates the current sub-processing, returns to the main flowchart, and terminates the current processing.

On the other hand, when it has been judged that the difference correction flag is set to "OFF", that is, it has been judged that the difference is not corrected (S122: NO), the CPU 41 proceeds to the processing at S124. At S124, the CPU 41 specifies the "coordinate difference pattern" when drawing, on the map of the navigation map information 26, the "coordinate point sequences" corresponding to the two or more link IDs stored in the "link ID" of the matching table corresponding to the system ID acquired at S12, which have been extracted at S115, and the links corresponding to the respective link IDs of the navigation map information 26.

Specifically, when against the "coordinate point sequences" corresponding to the respective two or more link IDs stored in the "link ID" of the matching table, the links corresponding to the respective links of the navigation map information 26 are inclined by a predetermined angle, the CPU 41 specifies the "coordinate difference pattern" as a "rotated pattern", sets the rotated pattern flag to "ON", and stores it in the RAM 42. In addition, the CPU 41 calculates an inclination angle and stores it in the RAM 42. The rotated pattern flag is stored in the RAM 42 being set to "OFF when the navigation device 1 has started.

In addition, when against the "coordinate point sequences" corresponding to the respective two or more link IDs stored in the "link ID" of the matching table, the links corresponding to the respective links of the navigation map information 26 are enlarged by a predetermined enlarged ratio, the CPU 41 specifies the "coordinate difference pattern" as an "enlarged pattern", sets the enlarged pattern flag to "ON", and stores it in the RAM 42. In addition, the CPU 41 calculates the enlarged ratio and stores it in the RAM 42. The enlarged pattern is stored in the RAM 42 being set to "OFF when the navigation device 1 has started.

In addition, when against the "coordinate point sequences" corresponding to the respective two or more link IDs stored in the "link ID" of the matching table, the links corresponding to the respective links of the navigation map information 26 are reduced by a predetermined reduced ratio, the CPU 41 specifies the "coordinate difference pattern" as a "reduced pattern", sets the reduced pattern flag to "ON", and stores it in the RAM 42. In addition, the CPU 41 calculates the reduced ratio and stores it in the RAM 42. The reduced pattern flag is stored in the RAM 42 being set to "OFF when the navigation device 1 has started.

Subsequently, at S125, the CPU 41 executes judging processing to judge whether the "coordinate difference pattern" is the "rotated pattern." Specifically, the CPU 41 reads the rotated pattern flag from the RAM 42 and judges whether the rotated pattern flag is set to "ON." When it has been judged that the "coordinate difference pattern" is the "rotated pattern," that is, when it has been judged that the rotated pattern flag is set to "ON" (S125: YES), the CPU 41 proceeds to the processing at S126.

At S126, the CPU 41 reads the inclination angle acquired at S124 from the RAM 42, corrects the "unconverted coordinate point sequence" allocated on the map of the navigation map information 26 to the coordinate point sequence rotated by the inclination angle, and stores it anew as the "unconverted coordinate point sequence" in the RAM 42. In addition, the CPU 41 reads the difference correction flag from the RAM 42, sets the difference correction flag to "ON," and stores it anew in the RAM 42. In addition, the CPU 41 reads the rotated pattern flag from the RAM 42, sets the rotated pattern flag to "OFF", and stores it anew in the RAM 42. Thereafter, the CPU 41 executes the processing at S111 and subsequent processing.

On the other hand, when it has been judged that the "coordinate difference pattern" is not the "rotated pattern," that is, it has been judged that the rotated pattern flag is set to "OFF" (S125: NO), the CPU 41 proceeds to the processing at S127. At S127, the CPU 41 executes judging processing to judge whether the "coordinate difference pattern" is the "enlarged pattern." Specifically, the CPU 41 reads the enlarged pattern flag from the RAM 42 and judges whether the enlarged pattern flag is set to "ON."

When it has been judged that the "coordinate difference pattern" is the "enlarged pattern," that is, it has been judged that the enlarged pattern flag is set to "ON" (S127: YES), the CPU 41 proceeds to the processing at S128. At S128, the CPU 41 reads the enlarged ratio acquired at S124 from the RAM 42, corrects the "unconverted coordinate point sequence" allocated on the map of the navigation map information 26 to the coordinate point sequence enlarged by the enlarged ratio, and stores it anew as the "unconverted coordinate point sequence" in the RAM 42.

In addition, the CPU 41 reads the difference correction flag from the RAM 42, sets the difference correction flag to "ON," and stores it anew in the RAM 42. The CPU 41 reads the enlarged pattern flag from the RAM 42, sets the enlarged pattern flag to "OFF", and stores it anew in the RAM 42. Thereafter, the CPU 41 executes the processing at S111 and subsequent processing.

On the other hand, when it has been judged that the "coordinate difference pattern" is not the "enlarged pattern," that is, when it has been judged that the enlarged pattern flag is set to "OFF" (S127: NO), the CPU 41 proceeds to the processing at S129. At S129, the CPU 41. executes judging processing to judge whether the "coordinate difference pattern" is the "reduced pattern." Specifically, the CPU 41 reads the reduced pattern flag from the RAM 42 and judges whether the reduced pattern flag is set to "ON."

When it has been judged that the "coordinate difference pattern" is the "reduced pattern," that is, when it has been judged that the reduced pattern flag is set to "ON" (S129: YES), the CPU 41 proceeds to the processing at S130. At S130, the CPU 41 reads the reduced ratio acquired at S124 from the RAM 42, corrects the "unconverted coordinate point sequence" allocated on the map of the navigation map information 26 to the coordinate point sequence reduced by the reduced ratio, and stores it anew as the "unconverted coordinate point sequence" in the RAM 42.

In addition, the CPU 41 reads the difference correction flag from the RAM 42, sets the difference correction flag to "ON," and stores it anew in the RAM 42. The CPU 41 reads the reduced pattern flag from the RAM 42, sets the reduced pattern flag to "OFF", and stores it anew in the RAM 42. Thereafter, the CPU 41 executes the processing at S111 and subsequent processing.

On the other hand, when it has been judged that the "coordinate difference pattern" is not the "reduced pattern," that is, when it has been judged that the reduced pattern flag is set to "OFF" (S129: NO), the CPU 41 reads the difference correction flag from the RAM 42, sets the difference correction flag to "ON", and stores it anew in the RAM 42. Thereafter, the CPU 41 executes the processing at S111 and subsequent processing.

### [Coordinate point sequence determining processing]

Next, "coordinate point determining processing" is described with reference to FIG. 8. The "coordinate point sequence determining processing" is executed by the CPU 41 of the navigation device 1 and processing to convert the provisionally determined coordinate point sequence stored in the respective matching table F1 to F3 into the determined coordinate point sequence and store the link ID of the navigation map information 26 corresponding to the coordinate point sequence. The program shown by the flowchart in FIG. 8 is regularly (for example, every 24 hours) executed by the CPU 41 during time periods such as late evening when processing such as route guidance is not executed.

As shown in FIG. 8, firstly, at S211, the CPU 41 executes judging processing to judge whether "0" is stored in the "determination flag" of the matching table F1, that is, whether a "provisionally determined coordinate point sequence" is stored in the "coordinate point sequence of A road information transmitting system."

When it has been judged that "0" is stored in the "determination flag" of the matching table F1 (S211: YES), the CPU 41 proceeds to the processing at S212. At S212, the CPU 41 executes judging processing to judge whether all of the data of the "coordinate point sequence of A road information transmitting system" and the "determination flag" of the matching table F1 have been sequentially read. When it has been judged that all of the data of the "coordinate point sequence of A road information transmitting system" and the "determination flag" of the matching table F1 have been sequentially read (S212: YES), the CPU 41 proceeds to the processing at S216.

On the other hand, when it has been judged that there is data that has not been read in the "coordinate point sequence of A road information transmitting system" and the "determination flag" of the matching table F1 (S212: NO), the CPU 41 proceeds to the processing at S213. At S213, the CPU 41 reads a set of data that has not yet been read among the data of the "coordinate point sequence of A road information transmitting system" and the "determination flag" of the matching table F1.

Subsequently, at S214, the CPU 41 executes judging processing to judge whether the coordinate point sequence read from the matching table F1 is the "provisionally determined coordinate point sequence," that is, whether the determination flag is "0." When the coordinate point sequence read from the matching table F1 is not the "provisionally determined coordinate point sequence," that is, the determination flag is "1" (S214: NO), the CPU 41 executes the processing at S212 and the subsequent processing.

On the other hand, when the coordinate point sequence read from the matching table F1 is the "provisionally determined coordinate point sequence," that is, the determination flag is "0" (S214: YES), the CPU 41 stores the provisionally determined coordinate point sequence as the "unconverted coordinate point sequence" in the RAM 42, and thereafter proceeds to the processing at S215. At S215, the CPU 41 executes the sub-processing of the "matching table updating processing" executed at S16, and thereafter executes the processing at S212 and the subsequent processing.

When it has been judged that "0" is not stored in the "determination flag" of the matching table F1 (S211: NO), the CPU 41 proceeds to the processing at S216. At S216, the CPU 41 executes judging processing to judge whether the processing at 211 and the subsequent processing has been executed for the matching table F2 and the matching table F3.

When it has been judged that the processing at 211 and the subsequent processing has not been executed for the matching table F2, or it has been judged that the processing at 211 and the subsequent processing has not been executed for the matching table F3 (S216: NO), the CPU 41 selects a matching table, for which the processing at S211 and the subsequent processing is not executed yet, from the matching table F2 and the matching table F3 and executes the processing at 211 and the subsequent processing.
On the other hand, when it has been judged that the processing at 211 and the subsequent processing has been executed for the matching table F2 and the matching table F3 (S216: YES), the CPU 41 terminates the current processing.

As described in detail above, the navigation device 1 according to the present embodiment, when the link ID corresponding to the coordinate point sequence included in the road information received from the A road information transmitting system 3A, the B road information transmitting system 3B, or the C road information transmitting system 3C is stored in the matching tables F1 to F3 corresponding to the road information transmitting system 3A to 3C, the CPU 41 converts the coordinate point sequence into the link ID stored in the matching tables F1 to F3. Thereby, the CPU 41 is capable of accurately and rapidly specifying the link on the map of the navigation map information 26 corresponding to the coordinate point sequence included in the road information received from the road information transmitting systems 3A to 3C.

When the link ID corresponding to the coordinate point sequence included in the road information received from the respective road information transmitting systems 3A to 3C is not stored in the matching tables F1 to F3 corresponding to the road information transmitting systems 3A to 3C, if one candidate link corresponds to the "unconverted coordinate point sequence," the CPU 41 converts the "unconverted coordinate point sequence" into the link ID of the one candidate link. Thereby, the CPU 41 is capable of accurately specifying the link on the map of the navigation map information 26 corresponding to the road information even when the link ID corresponding to the coordinate point sequence included in the road information received from the respective road information transmitting systems 3A to 3C is not stored in the matching tables F1 to F3 corresponding to the road information transmitting systems 3A to 3C.

If a plurality of candidate links correspond to the "unconverted coordinate point sequence," the CPU 41 selects one candidate link that is located at the position having the same coordinate difference pattern and converts the "unconverted coordinate point sequence" into the link ID of the selected candidate link. Thereby, the CPU 41 is capable of more accurately specifying the link on the map of the navigation map information 26 corresponding to the road information even when the link ID corresponding to the coordinate point sequence included in the road information is not stored in the matching tables F1 to F3.

In addition, when the CPU 41 has converted the "unconverted coordinate point sequence" into a link ID not stored in the corresponding matching table among the matching tables F1 to F3, the CPU 41 stores the "unconverted coordinate point sequence" in the "coordinate point sequence" of the corresponding matching table, stores the link ID of the candidate link stored in association with the "unconverted coordinate point sequence" in the "link ID" of the matching table, and stores "1" in the "determination flag" of the matching table. In addition, the CPU 41 calculates the coordinate difference amount in the X-direction and Y-direction of the candidate link, whose link ID was stored in the matching table, against the "unconverted coordinate point sequence" allocated on the map of the navigation map information 26, stores the respective values in the "X-direction" and the "Y-direction" of the "coordinate difference amount" of the matching table, and updates the matching table.

Thereby, when the link ID corresponding to the coordinate point sequence included in the road information delivered from the respective road information transmitting systems 3A to 3C is not stored in the corresponding matching table among the matching tables F1 to F3, it is possible to update the matching table by specifying the link ID and the coordinate difference amount corresponding the coordinate point sequence and storing it anew in the matching table. Therefore, it is possible to improve the accuracy of the matching table.

In addition, when the CPU 41 regularly executes the "coordinate point sequence determining processing, " if the "provisionally determined coordinate point sequence" is stored in the matching tables F1 to F3, the CPU 41 executes the sub-processing of the "matching table updating processing." Through such processing, the CPU 41 updates the matching tables F1 to F3. Therefore, it is possible to further improve the accuracy of the matching tables F1 to F3.

The present invention is not limited to the above-mentioned embodiment, but various improvements and variations may be made without departing from the broad spirit and scope of the underlying principles.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

## Claims

1. A road data creating device, **characterized by**:
a map information storing unit that stores map information including map coordinate data indicating a position on a map with a coordinate;
a matching table storing unit that stores a matching table, in which a coordinate point sequence specifying a position of a road on the map with at least two coordinates is stored in association with a link ID identifying a link of the map information and a coordinate difference pattern between the position of the road specified by the coordinate point sequence and the position of the link specified by the map coordinate data is stored in association with the link ID, the coordinate point sequence being delivered from a road information transmitting system;
a road information acquiring unit that acquires road information including the coordinate point sequence delivered from the road information transmitting system;
a matching judging unit that judges whether the link ID corresponding to the coordinate point sequence included in the road information is stored in the matching table;
a first link ID converting unit that, when it has been judged that the link ID corresponding to the coordinate point sequence included in the road information is stored in the matching table, converts the coordinate point sequence into the link ID corresponding to the coordinate point sequence;
a first candidate link extracting unit, when it has been judged that the link ID corresponding to the coordinate point sequence included in the road information is not stored in the matching table, extracts one or more candidate links as candidates for the link corresponding to the coordinate point sequence based on the map information; and
a second link ID converting unit that,
when one candidate link has been extracted by the first candidate link extracting unit, converts the coordinate point sequence into the link ID of the one candidate link, and
when a plurality of candidate links have been extracted by the first candidate link extracting unit, converts the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.

2. The road data creating device according to claim 1, comprising a first matching table updating unit that, when the coordinate point sequence has been converted into a link ID by the second link ID converting unit, stores the coordinate point sequence in association with the link ID in the matching table and stores the coordinate difference pattern between the position of the road specified by the coordinate point sequence and the position of the link of the link ID specified by the map coordinate data in association with the link ID in the matching table.

3. The road data creating device according to claim 2, comprising:
a provisional coordinate point sequence storing unit that, when the coordinate point sequence has not been converted into a link ID by the second link ID converting unit, stores the coordinate point sequence as a provisionally determined coordinate point sequence in the matching table;
a provisionally storing judging unit that judges at predetermined time intervals whether the provisionally determined coordinate point sequence is stored in the matching table;
a second candidate link extracting unit that, when it has been judged that the provisionally determined coordinate point sequence is stored in the matching table, extracts a plurality of candidate links corresponding to the provisionally determined coordinate point sequence based on the map information; and
a second matching table updating unit that specifies the link ID of one candidate link among the plurality of candidate links, based on the coordinate difference patterns corresponding to the link IDs stored in the matching table among the link IDs of the links within a predetermined area in the vicinity of the plurality of candidate links extracted by the second candidate link extracting unit, converts the provisionally determined coordinate point sequence into the coordinate point sequence, stores anew the coordinate point sequence in association with the specified link ID in the matching table, and stores the coordinate difference pattern between the position of the road on the map specified by the coordinate point sequence and the position of the one candidate link specified by the map coordinate data in association with the specified link ID in the matching table.

4. The road data creating device according to any one of claims 1 to 3, comprising:
a coordinate difference pattern judging unit that, when a plurality of candidate links have been extracted by the first candidate link extracting unit or the second candidate link extracting unit, judges whether the coordinate difference patterns between the positions of the plurality of candidate links and the positions of the roads specified by the coordinate point sequences corresponding to the plurality of candidate links are in a same direction and of a same distance; and
a coordinate point sequence correcting unit that, when it has been judged that the coordinate difference patterns between the positions of the plurality of candidate links and the positions of the roads specified by the coordinate point sequences corresponding to the plurality of candidate links are not in the same direction and of the same distance, corrects the road specified by the coordinate point sequence by rotating by a predetermined angle, enlarging by a predetermined length, or reducing by a predetermined length.

5. A road data creating method **characterized by** the steps of:
acquiring road information including a coordinate point sequence specifying a position of a road on a map with at least two coordinates, the road information being delivered from a road information transmitting system;
judging whether a link ID corresponding to the coordinate point sequence included in the road information acquired at the road information acquiring step is stored in a matching table, in which the coordinate point sequence is stored in association with the link ID identifying a link of the map information and a coordinate difference pattern between the position of the road specified by the coordinate point sequence and the position of the link specified by map coordinate data is stored in association with the link ID, the map coordinate data indicating a position on the map with a coordinate;
converting, when it has been judged at the matching judging step that the link ID corresponding to the coordinate point sequence included in the road information is stored in the matching table, the coordinate point sequence into the link ID corresponding to the coordinate point sequence;
extracting, when it has been judged at the matching judging step that the link ID corresponding to the coordinate point sequence included in the road information is not stored in the matching table, one or more candidate links as candidates for the link corresponding to the coordinate point sequence based on the map information;
converting, when one candidate link has been extracted at the first candidate link extracting step, the coordinate point sequence into the link ID of the one candidate link; and
converting, when a plurality of candidate links have been extracted at the first candidate link extracting step, the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.

6. A program causing a computer including: a map information storing unit that stores map information including map coordinate data indicating a position on a map with a coordinate; and a matching table storing unit that stores a matching table, in which a coordinate point sequence specifying a position of a road on the map with at least two coordinates, the coordinate point sequence being delivered from a road information transmitting system, is stored in association with a link ID identifying a link of the map information and a coordinate difference pattern between the position of the road specified by the coordinate point sequence and the position of the link specified by the map coordinate data is stored in association with the link ID, to execute the steps of:
acquiring road information including the coordinate point sequence that is delivered from the road information transmitting system;
judging whether the link ID corresponding to the coordinate point sequence included in the road information acquired at the road information acquiring step is stored in the matching table;
converting, when it has been judged at the matching judging step that the link ID corresponding to the coordinate point sequence included in the road information is stored in the matching table, the coordinate point sequence into the link ID corresponding to the coordinate point sequence;
extracting, when it has been judged at the matching judging step that the link ID corresponding to the coordinate point sequence included in the road information is not stored in the matching table, one or more candidate links as candidates for the link corresponding to the coordinate point sequence based on the map information;
converting, when one candidate link has been extracted at the first candidate link extracting step, the coordinate point sequence into the link ID of the one candidate link; and
converting, when a plurality of candidate links have been extracted at the first candidate link extracting step, the coordinate point sequence into the link ID of one candidate link among the plurality of candidate links, based on the coordinate difference patterns corresponding to the link IDs stored in the matching table among the link IDs of the links within a predetermined area in the vicinity of the plurality of candidate links.
